Europäisches Patentamt

**European Patent Office**

Office européen des brevets

(19)

(11) Numéro de publication: **0 237 770**
**B1**

(12)

# FASCICULE DE BREVET EUROPEEN

(45) Date de publication du fascicule du brevet:
**04.04.90**

(51) Int. Cl.⁴: **F16J 15/46**

(21) Numéro de dépôt: **87101835.4**

(22) Date de dépôt: **10.02.87**

(54) Joint d'étanchéité gonflable, auto-serrant par dépressurisation.

(30) Priorité: **10.02.86 FR 8601772**

(73) Titulaire: **LE JOINT FRANCAIS, 84 à 116 rue Salvador Allende, F-95870 Bezons(FR)**

(43) Date de publication de la demande:
**23.09.87 Bulletin 87/39**

(72) Inventeur: **Colin, Olivier, 20bis, rue Jean-Moulin, F-95100 Argenteuil(FR)**

(45) Mention de la délivrance du brevet:
**04.04.90 Bulletin 90/14**

(74) Mandataire: **Weinmiller, Jürgen et al, Lennéstrasse 9 Postfach 24, D-8133 Feldafing(DE)**

(84) Etats contractants désignés:
**AT BE CH DE ES FR GB IT LI LU NL SE**

(56) Documents cités:
**CH-A- 409 555**
**FR-A- 1 391 923**
**FR-A- 2 315 045**

## Description

La présente invention concerne un joint d'étanchéité gonflable en élastomère, auto-serrant par dépressurisation, solidaire d'une première pièce et comprenant une ou plusieurs lèvres destinées à être appliquées contre la surface d'une autre pièce vis-à-vis de laquelle l'étanchéité est à réaliser, une surface déformable disposée du côté du joint opposé aux lèvres, des flancs reliant les lèvres et la surface déformable opposée et délimitant avec elles un volume interne, et des moyens d'introduction d'un fluide sous pression dans le volume interne.

Les joints gonflables connus sont constitués d'une chambre en élastomère plus ou moins déformable géométriquement sous la pression d'un fluide, liquide ou plus fréquemment gaz, introduit dans la chambre. Lorsque la pression du fluide augmente, le joint se déforme et vient s'appliquer sur une surface vis-à-vis de laquelle l'étanchéité est à réaliser, celle-ci étant plus ou moins importante selon la pression exercée, entraînant une déformation plus ou moins importante de la chambre. Lorsque la pression interne est supprimée, le joint se rétracte et permet un démontage facile.

Ce genre de joint présente l'inconvénient de nécessiter le maintient d'une pression constante et permanente pour assurer l'étanchéité, d'où une vulnérabilité importante au cours du temps, par les risques de porosité, des fuites ou même de crevaison, ainsi que d'interruption de l'alimentation en fluide. Dans le cas de joints montés sur des ensembles qui se déplacent, il n'est généralement pas prévu d'infrastructure de maintien en pression, de sorte que l'on doit procéder à des vérifications périodiques du niveau de pression interne.

Le document FR-A 2 315 045 décrit un joint à lèvre gonflable pour assurer l'étanchéité de la jonction de l'extrémité d'un tube avec une ouverture circulaire, comprenant une surface dont la déformation par introduction d'un fluide sous pression dans la cavité interne écarte la lèvre des bords du tube, cette lèvre se rabattant sur le tube lorsque la pression interne est supprimée. Mais il ne permet pas d'assurer une translation de lèvres du joint entre une position d'appui contre une surface plane et une position écartée de cette surface plane, et n'assure une bonne étanchéité que dans un seul sens.

Un but de la présente invention est de procurer un joint qui ne nécessite pas une pression constante et permanente du joint pour maintenir l'étanchéité, qui assure cependant une aussi bonne étanchéité qu' un joint maintenu sous une telle pression constante et permanente, tout en restant facilement démontable, et qui permette d'assurer une étanchéité dans deux sens par translation de lèvres d'étanchéité entre une position d'appui contre une surface plane en l'absence de pression interne, et d'écartement de cette surface plane par établissement de la pression interne.

Le joint selon l'invention est caractérisé en ce qu'il comprend en outre des moyens d' immobilisation des flancs plus proches des lèvres que de la surface déformable opposée en une zone de section droite minimale, divisant le volume interne en une cavité de petit volume et de petite section droite du côté des lèvres et une cavité de grand volume et de grande section droite du côté de la surface déformable opposée, des moyens de liaison de la surface interne des lèvres avec le milieu de la surface déformable opposée, et en ce que les moyens d'introduction du fluide sous pression débouchent dans la cavité de grand volume. Un tel joint, de par sa configuration, se développe et assure l'étanchéité lorsque la pression interne est supprimée, et au contraire s'efface, se rétracte et devient démontable lorsqu'il est mis en pression.

La pression est donc nécessaire pour monter ou démonter le joint. Un tel joint peut être qualifié de joint rétro-gonflable.

Ce joint répond en outre de préférence à au moins l' une des caractéristiques suivantes:

– Les moyens de liaison de la surface interne des lèvres avec la surface déformable opposée sont constitués par une cloison centrale divisant chacun des cavités en deux parties et percée d'un orifice de communication entre les deux parties de la cavité de grand volume.

– Les moyens d'immobilisation des flancs sont constitués par un rebord fixe en matériau non déformable de la première pièce et une gorge de la surface externe est flancs engagée dans ce rebord.

– Les flancs de la cavité de grand volume comportent un repli extensible assurant un débattement important de la surface déformable opposée aux lèvres.

Il est décrit ci-après, à titre d'exemple et en référence aux figures du dessin annexé, deux joints selon l' invention.

La figure 1 représente en section droite un joint à petit développement.

La figure 2 représente en section droite un joint à grand développement.

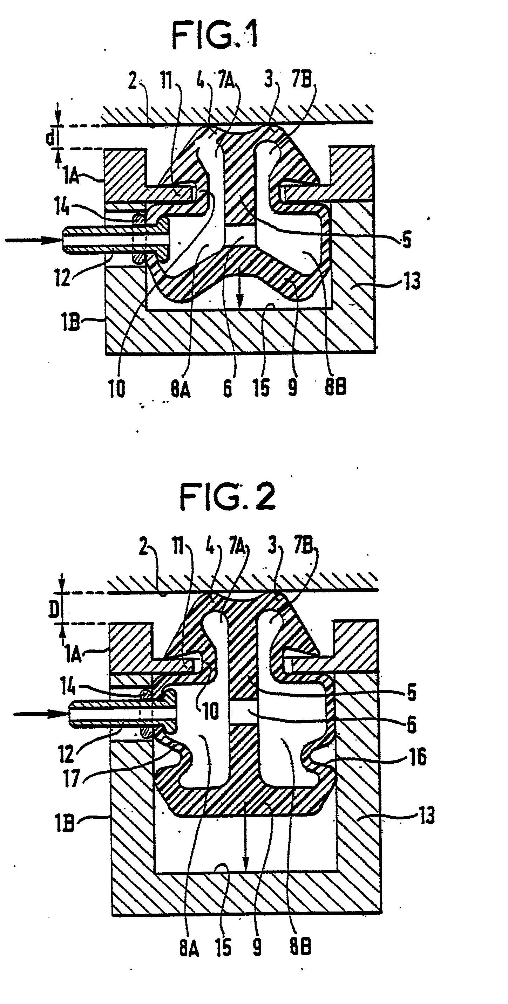

Dans la figure 1, le joint est porté par une embase 1B sur laquelle sont rapportée deux pièces 1A comportant une surface métallique plane faisant face à une surface métallique 2. Les lèvres 3, 4 du joint sont représentés ici serrées contre la surface 2, la pression interne n'étant pas appliquée. Il se présente ainsi non déformé. La cloison médiane 5, percée d'une ouverture de communication 6, divise le volume interne en deux chambres droite 7 et gauche 8 et relie les lèvres 3 et 4 au fond 9 du joint. Chacune de ces chambres se divise en une partie supérieure 7A, 7B de volume et de section droite relativement faibles et une partie inférieure 8A, 8B de plus grand volume et de plus grande section droite. Le joint comporte sur ses flancs latéraux des gorges telles que 10, engagées dans un rebord 11 de la pièce de support.

Un embout 12, traversant la paroi latérale 13 de la pièce de support et celle du joint, pour déboucher dans la partie inférieure 8A de la chambre gauche, permet l'introduction d'un fluide sous pression, tel que de l'air. L'étanchéité entre l'embout et la surface latérale du joint est assurée par un écrou 14.

Lorsque l'on établit la pression d'air, celle-ci, compte tenu de la configuration interne du joint (section plus importante de la partie basse par rapport à la partie haute) a pour effet d'agir sur le fond 9 du joint lequel se déplace comme représenté par la flèche et occupe le fond de son logement, en venant au contact de la surface interne 15 de celui-ci. Il entraîne ainsi mécaniquement grâce à la cloison 5 toute la partie supérieure du joint vers le fond de la gorge, en supprimant le contact avec la surface métallique 2 et en démasquant le jeu d.

Le joint à grand développement représenté en figure 2 est analogue pour l'essentiel à celui de la figure 1, mais ses flancs comportent des replis extensibles 16, 17 qui s'allongent sous l'effet de la pression interne et permettent un plus grand débattement vers le bas de la base 9, comme représenté par la flèche. Le retrait D des lèvres est de ce fait plus important que celui des lèvres du premier joint.

Bien que les joints qui viennent d'être décrits en référence aux exemples paraissent les formes de réalisation préférables de l'invention, on comprendra que diverses modifications peuvent leur être apportées sans sortir du cadre de l'invention. En particulier, les parties supérieure et inférieure des chambres pourraient ne communiquer que par des orifices. La cloison verticale peut être percée de plusieurs orifices de communication entre les chambres droite et gauche.

## Revendications

1. Joint d'étanchéité gonflable en élastomère, auto-serrant par dépressurisation, solidaire d'une première pièce (1A, 1B) et comprenant une ou plusieurs lèvres (3, 4) destinée à être appliquées contre la surface (2) d'une autre pièce vis-à-vis de laquelle l'étanchéité est à réaliser, une surface déformable (9) disposée du côté du joint opposé aux lèvres, des flancs reliant les lèvres et la surface déformable opposée et délimitant avec elles un volume interne, et des moyens (12) d'introduction d'un fluide sous pression dans le volume interne, caractérisé en ce qu'il comprend en outre des moyens (10, 11) d'immobilisation des flancs plus proches des lèvres que de la surface déformable opposée en une zone de section droit minimale, divisant le volume interne en une cavité (7A, 7B) de petit volume et de petite section droite du côté des lèvres et une cavité (8A, 8B) de grand volume et de grande section droite du côté de la surface déformable opposée (9), des moyens de liaison de la surface interne des lèvres (3, 4) avec le milieu de la surface déformable opposée, et en ce que les moyens d'introduction du fluide sous pression débouchent dans la cavité de grand volume.

2. Joint selon la revendication 1, caractérisé en ce que les moyens de liaison de la surface interne des lèvres (3, 4) avec le milieu de la surface déformable opposée (9) sont constitués par une cloison centrale (5) divisant chacune des cavités en deux parties (7A, 8A, 7B, 8B), et percée d'un orifice (6) de communication entre les deux parties de la cavité de grand volume.

3. Joint selon les revendications 1 ou 2, caractérisé en ce que les moyens d'immobilisation des flancs sont constitués par un rebord fixe (11) en matériau non déformable de la première pièce et une gorge (10) de la surface externe des flancs engagée dans ce rebord.

4. Joint selon l'une des revendications 1 à 3, caractérisé en ce que les flancs de la cavité de grand volume comportent un repli extensible (16, 17) assurant un débattement important de la surface déformable opposée aux lèvres.

## Patentansprüche

1. Aufblasbare, durch Druckentlastung selbstanpressende Elastomerdichtung, die an einem ersten Bauelement (1A, 1B) befestigt ist, mit einer oder mehreren Lippen (3, 4), die gegen die Oberfläche (2) eines anderen Bauelements anliegen, gegen das die Abdichtung erfolgen soll, mit einer verformbaren Oberfläche (9) an der den Lippen gegenüberliegenden Seite der Dichtung, mit Flanken, die die Lippen und die gegenüberliegende verformbare Oberfläche verbinden und zusammen mit ihnen einen Innenraum einschließen, und mit Mitteln (12) zur Einleitung eines unter Druck stehenden Fluids in den Innenraum, dadurch gekennzeichnet, daß sie weiter Mittel (10, 11) zum Festhalten der näher zu den Lippen als zur gegenüberliegenden verformbaren Oberfläche gelegenen Flanken in einer Zone mit minimalem Querschnitt, welche den Innenraum in einen Hohlraum (7A, 7B) mit kleinem Volumen und kleinem Querschnitt auf Seiten der Lippen und in einen Hohlraum (8A, 8B) mit großem Volumen und großem Querschnitt auf Seiten der gegenüberliegenden verformbaren Oberfläche (9) unterteilt, und Verbindungsmittel zwischen der inneren Oberfläche der Lippen (3, 4) und der Mitte der gegenüberliegenden verformbaren Fläche aufweist, und daß die Mittel zur Einleitung des unter Druck stehenden Fluids in den Hohlraum mit großem Volumen münden.

2. Dichtung nach Anspruch 1, dadurch gekennzeichnet, daß die Verbindungsmittel zwischen der Innenoberfläche der Lippen (3, 4) und der gegenüberliegenden verformbaren Oberfläche (9) aus einer zentralen Wand (5) bestehen, die jeden der beiden Hohlräume in zwei Abschnitte (7A, 8A, 7B, 8B) unterteilt und von einer Öffnung (6) zur Verbindung der beiden Abschnitte des großräumigen Hohlraums durchdrungen ist.

3. Dichtung nach den Ansprüchen 1 oder 2, dadurch gekennzeichnet, daß die Mittel zum Festhalten der Flanken durch einen festen Randsteg (11) des ersten Bauelements aus nichtverformbarem Material und einer den Steg aufnehmenden Kehle (10) der äußeren Oberfläche der Flanken gebildet werden.

4. Dichtung nach einem der Ansprüche 1 bis 3, dadurch gekennzeichnet, daß die Flanken des großräumigen Hohlraums eine dehnbare Falte (16, 17) aufweisen, die einen erheblichen Hub der den Lippen gegenüberliegenden verformbaren Oberfläche ermöglicht.

## Claims

1. An inflatable sealing gasket made of elastomer and operable by depressurization, the gasket being fixed to a first part, (1A, 1B) and comprising: one or more lips (3, 4) for pressing against the facing surface (2) of another part with which sealing is to be obtained; a deformable surface (9) disposed on the side of the gasket which is opposite to the lips; sidewalls interconnecting the lips and the opposite deformable surface and delimiting therewith an internal volume; and means (12) for inserting a fluid under pressure into internal volume, the gasket being characterized in that it further comprises: sidewall fixing means (10, 11) which are at a zone of minimum cross-section, closer to the lips than to the opposite deformable surface and dividing the internal volume into a cavity (7A, 7B) which is adjacent to the lips and which is smaller in volume and smaller in cross-section, and a cavity (8A, 8B) which is adjacent to the opposite deformable surface (9) and which is larger in volume and larger in cross-section; and means connecting the iside surface of the lips (3, 4) with the middle of the opposite deformable surface, and in that the means for inserting fluid under pressure open out into the larger volume cavity.

2. A gasket according to claim 1, characterized in that the means connecting the inside surface of the lips (3, 4) with the middle of the opposite deformable surface (9) are constitued by a central partition (5) dividing each of the cavities into two portions (7A, 8A, 7B, 8B), and pierced by a communication orifice (6) between the two portions of the larger volume cavity.

3. A gasket according to claim 1 or 2, characterized in that the means for holding the sidewalls are constituted by respective fixed rims (11) of the first part and made of nondeformable material, and respective grooves (10) in the outside surfaces of the sidewalls and engaged with the rims.

4. A gasket according to any one of claims 1 to 3, characterized in that the sidewalls of the larger volume cavity include respective extensible folds (16, 17) enabling the deformable surface opposite to the lips to move trough a large distance.

# FIG.1

# FIG.2